# EUROPÄISCHE PATENTSCHRIFT

(11) **EP 0 847 887 B1**
(45) Veröffentlichungstag und Bekanntmachung des Hinweises auf die Patenterteilung: **31.08.2005**
(21) Anmeldenummer: 97119772.8
(22) Anmeldetag: 12.11.1997
(51) Int. Cl.: B60H 1/00

(54) **Mehrkanalige Heiz- oder Klimaanlage**
Multi-channel heating or air conditioning unit
Dispositif de chauffage ou de climatisation à canaux multiples

(30) Priorität: 10.12.1996 DE 19651222
(43) Veröffentlichungstag der Anmeldung: 17.06.1998
(73) Patentinhaber: Behr GmbH & Co. KG, 70469 Stuttgart (DE)
(72) Erfinder: Baruschke, Wilhelm, Dipl.-Ing., 73117 Wangen (DE); Lochmahr, Karl, 71665 Vaihingen (DE); Schweizer, Gebhard, Dipl.-Ing., 71229 Leonberg (DE); Speer, Markus, 74343 Sachsenheim (DE)

(56) Entgegenhaltungen:
- DE-A- 4 425 697
- DE-A- 19 527 739
- PATENT ABSTRACTS OF JAPAN vol. 008, no. 128 (M-302), 14. Juni 1984 (1984-06-14) & JP 59 032511 A (NISSAN JIDOSHA KK), 22. Februar 1984 (1984-02-22)

## Beschreibung

Die Erfindung bezieht sich auf eine mehrkanalige Heiz- oder Klimaanlage nach dem Oberbegriff des Anspruchs 1. Derartige Heiz- oder Klimaanlagen werden beispielsweise in Automobilen verwendet, um mit den parallelen Luftkanälen unterschiedliche Fahrzeuginnenraumbereiche individuell klimatisieren zu können.

Eine Klimaanlage dieser Art ist in der Patentschrift US 4.482.009 beschrieben. Bei der dortigen Klimaanlage teilt sich ein gemeinsamer, eingangsseitiger Luftkanalabschnitt, in dem das Luftzufuhrgebläse und der Verdampfer angeordnet sind, vor einer Heizkörpereinheit mit optional zugeordneter, temperatursteuernder Luftklappeneinheit in zwei parallele Luftkanalabschnitte auf, für welche die jeweilige Lufttemperatur getrennt regelbar ist. Von diesen beiden parallelen Luftkanalabschnitten führen strömungsabwärts neben je einem Entfroster-Luftkanal vier weitere parallele Luftkanäle ab, denen eingangsseitig eine spezielle Luftverteileinheit aus mehreren ansteuerbaren Luftklappen zugeordnet ist. Dabei sind zwei der vier Luftkanäle je einem der beiden vorgeordneten Luftkanalabschnitte zugeordnet, während die beiden anderen wahlweise mit steuerbaren Luftströmungsanteilen aus beiden vorgeschalteten Luftkanalabschnitten versorgt werden können. Über entsprechende Stelleinheiten können gewünschte Temperatursollwerte unabhängig voneinander für vier von den parallelen Luftkanälen klimatisierbare Fahrzeuginnenraumbereiche vorgegeben werden. Die Anlagensteuereinheit steuert die Anlagenkomponenten in Abhängigkeit von der Differenz zwischen den vorgegebenen Temperatur-Sollwerten und den in den jeweiligen Innenraumbereichen gemessenen Temperatur-Istwerten, insbesondere erfolgt davon abhängig die Steuerung der Leistung des gemeinsamen Luftzufuhrgebläses und die Steuerung der Stellung der Luftverteileinheit, d.h. die Stellungen der einzelnen beteiligten Luftklappen.

Aus der Patentschrift EP 0 214 605 B1 ist eine Heiz- oder Klimaanlage bekannt, die zwei parallele, unabhängig voneinander lufttemperaturregelbare Luftkanäle umfaßt, denen jeweils ein eigenes Luftzufuhrgebläse zugeordnet ist, wobei die beiden Gebläse unabhängig voneinander gesteuert werden.

Aus der Patentschrift EP 0 568 444 B1 ist es bekannt, die Einstellung der Leistung eines Luftzufuhrgebläses an die Einstellung einer Frischluft- und einer Umluftklappe zu koppeln, die strömungsaufwärts des Gebläses angeordnet sind, wobei die Klappenstellungen und die Gebläseleistung über ein gemeinsames Bedienorgan eingestellt werden.

Aus JP 59032511 A ist eine Heiz-und Klimaanlage gemäß dem Oberbegriff des Anspruchs 1 bekannt.

Der Erfindung liegt als technisches Problem die Bereitstellung einer Heiz- oder Klimaanlage der eingangs genannten Art zugrunde, die mit vergleichsweise geringem Realisierungsaufwand eine individuelle Luftmengeneinstellung für die verschiedenen parallelen Luftkanäle ermöglicht.

Die Erfindung löst dieses Problem durch die Bereitstellung einer Heiz- oder Klimaanlage mit den Merkmalen des Anspruchs 1. Bei dieser Heiz- oder Klimaanlage sind Mittel zur individuellen Vorgabe eines jeweiligen Luftmengensollwertes für jeden der parallelen Luftkanäle vorgesehen. Die Anlagensteuereinheit steuert abhängig von den dadurch vorgegebenen Luftmengensollwerten für die Luftkanäle sowohl die Leistung des Luftzufuhrgebläses als auch die Stellung der Luftverteileinheit. Dies ermöglicht eine individuelle Luftmengeneinstellung für die verschiedenen parallelen Luftkanäle unter Verwendung nur eines gemeinsamen, in seiner Förderleistung regelbaren Luftzufuhrgebläses. Die Heiz- oder Klimaanlage ist als luft-oder als wasserseitig geregelte Anlage ausführbar.

Bei einer nach Anspruch 2 weitergebildeten Heiz- oder Klimaanlage wird die Gebläseleistung anhand eines abgelegten Kennfeldes dergestalt eingestellt, daß sie mit wachsendem Luftmengensollwert für einen jeweiligen Luftkanal mit konkavem Verlauf, d.h. geringer werdender Steigung, ansteigt. Der maximale Gebläseleistungswert wird dabei nur dann erreicht, wenn die Luftmengensollwerte aller Luftkanäle auf ihren Maximalwert eingestellt sind. Ist nur für einen Luftkanal der maximale Luftmengensollwert vorgegeben, während für die übrigen Luftkanäle der minimale Luftmengensollwert null gewählt ist, nimmt die Gebläseleistung einen unterhalb ihres Maximalwertes liegenden minimalen Endwert an, der z.B. ca. 75% des Maximalwertes betragen kann. Von diesem minimalen Endwert aus wächst die Gebläseleistung bei wachsenden Luftmengensollwerten der übrigen Luftkanäle bis zu ihrem Maximalwert an. Diese Art der Gebläseleistungssteuerung bietet die Voraussetzung für eine komfortable, bereichsspezifische Klimatisierung über die einzelnen Luftkanäle mit relativ geringem Aufwand.

Bei einer nach Anspruch 3 weitergebildeten Klimaanlage ist die Luftverteileinheit zwischen dem Verdampfer und der stromabwärts davon positionierten Heizkörpereinheit angeordnet, wobei jedem Luftkanal ein eigener Heizkörperteil zur Aufheizung der durch den jeweiligen Luftkanal strömenden Luft zugeordnet ist. Eine dergestalt ausgelegte Anlage läßt sich verhältnismäßig kompakt bauen. Da der Verdampfer vor der Luftverteileinheit und damit noch in einem den parallelen Luftkanälen gemeinsam vorgeordneten Luftkanalabschnitt positioniert ist, kann auch dann, wenn nur einem Teil der Luftkanäle kalte Luft vom Verdampfer zugeführt werden soll, die gesamte Verdampferfläche und damit die gesamte Verdampferleistung genutzt werden.

Bei einer nach Anspruch 4 weitergebildeten Klimaanlage ist die Luftverteileinheit zwischen dem Luftzufuhrgebläse und dem Verdampfer angeordnet. Bei dieser Systemauslegung ist jedem Luftkanal ein eigener Teil des Verdampfers sowie der stromabwärts des Verdampfers positionierten Heizkörpereinheit zugeordnet. Die Luftverteileinheit läßt sich bei dieser Anlage im Fall von zwei Luftkanälen besonders einfach durch eine einzige Luftverteilklappe realisieren.

In weiterer Ausgestaltung ist gemäß Anspruch 5 jedem Luftkanal der Klimaanlage nach Anspruch 4 eine eigene temperatursteuernde Luftklappeneinheit zugeordnet, mit der jeweils nur ein einstellbarer Bruchteil der Luftströmung jedes Luftkanals über den zugehörigen Teil der Heizkörpereinheit geführt wird, um dadurch die Temperatur der im jeweiligen Luftkanal geführten Luft individuell einzustellen.

Vorteilhafte Ausführungsformen der Erfindung sind in den Zeichnungen dargestellt und werden nachfolgend beschrieben. Hierbei zeigen:
- Fig. 1: eine schematische Blockdiagrammdarstellung einer Heiz- oder Klimaanlage mit zwei Luftkanälen,
- Fig. 2: eine Darstellung eines Kennfeldes der Leistung eines in Fig. 1 verwendeten Luftzufuhrgebläses in Abhängigkeit von für die beiden Luftkanäle einzeln vorgebbaren Luftmengensollwerten,
- Fig. 3: eine Darstellung eines Kennfeldes der Stellung einer in Fig. 1 verwendeten Luftverteileinheit in Abhängigkeit von für die beiden Luftkanäle einzeln vorgebbaren Luftmengensollwerten,
- Fig. 4: eine schematische Längsschnittansicht des luftzufuhrseitigen Teils einer entsprechend Fig. 1 ausgelegten, asymmetrisch gebauten Klimaanlage und
- Fig. 5: eine schematische Längsschnittansicht des luftzufuhrseitigen Teils einer entsprechend Fig. 1 ausgelegten, symmetrisch gebauten Klimaanlage.

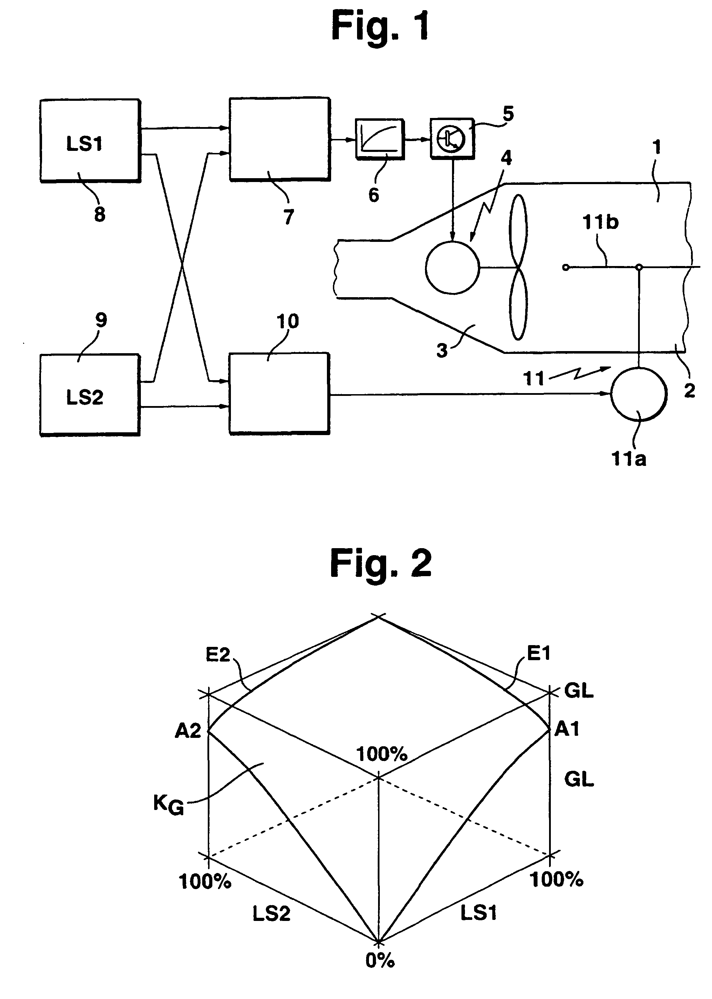

Die in Fig. 1 in ihrem prinzipiellen Aufbau blockdiagrammatisch dargestellte Klimaanlage ist beispielsweise für Kraftfahrzeuge, wie Automobile, zur individuellen Klimatisierung zweier Bereiche, z.B. des linken und des rechten Bereichs eines Fahrzeuginnenraums, verwendbar. Sie beinhaltet zwei getrennte, parallele Luftkanäle 1, 2, denen ein gemeinsamer Luftzufuhrabschnitt 3 vorgeschaltet ist, in welchem sich ein den Luftkanälen 1, 2 gemeinsames Luftzufuhrgebläse 4 befindet. Der Gebläsemotor ist über eine Gebläsereglereinheit 5 ansteuerbar, der ein Dämpfungsglied 6 vorgeschaltet ist. Ein Gebläsesteuerteil 7 einer zugehörigen Klimaanlagensteuereinheit erzeugt das dem Dämpfungsglied 6 zugeführte Gebläseleistungssteuersignal anhand eines abgespeicherten Kennfeldes in Abhängigkeit von zwei Luftmengensollwerten LS1, LS2, die vom Benutzer für den jeweiligen Luftkanal 1, 2 getrennt und unabhängig voneinander vorgegeben werden können. Hierzu sind zwei separate Luftmengenstelleinheiten 8, 9 vorgesehen, deren Ausgangssignale zum einen dem Gebläsesteuerteil 7 der Anlagensteuereinheit zugeführt sind. Die Luftmengenstelleinheiten 8, 9 können beispielsweise als entsprechende Drehknopf-Bedienelemente analog zu einem herkömmlichen Gebläseleistungssteller an einem Bediengerät der Klimaanlage angeordnet sein. Zum anderen sind diese beiden Luftmengensollwert-Ausgangssignale einem Luftverteilungs-Steuerteil 10 der Anlagensteuereinheit zugeführt, der einen Stellmotor 11a einer Luftverteileinheit 11 steuert. Der Stellmotor 11a betätigt eine Luftklappenanordnung 11b der Luftverteileinheit 11, die an der Eingangsseite der beiden getrennten Luftkanäle 1, 2 angeordnet ist und die vom Gebläse 4 gelieferte Luftmenge variabel auf die beiden Luftkanäle 1, 2 aufteilt. Die Ansteuerung des Stellmotors 11a und damit die Einstellung der jeweiligen Position der Luftklappenanordnung 11b erfolgt durch den Luftverteilungs-Steuerteil 10 der Anlagensteuereinheit anhand eines abgelegten Kennfeldes in Abhängigkeit von den beiden vorgegebenen Luftmengensollwerten LS1, LS2. Soweit hier nicht explizit beschrieben, besitzt die Anlagensteuereinheit einen herkömmlichen Aufbau und steuert in üblicher Weise die weiteren Klimaanlagenkomponenten.

In Fig. 2 ist das für die Einstellung der Gebläseleistung GL im Gebläsesteuerteil 7 der Anlagensteuereinheit abgelegte Kennfeld K_{G} dargestellt. Das Kennfeld K_{G} bildet ersichtlich eine zweidimensionale Fläche innerhalb eines Koordinatenwürfels, der vom Wertebereich des ersten Luftmengensollwertes LS1 zwischen verschwindender Luftmenge, d.h. 0%, und maximaler Luftmenge, d.h. 100%, für den ersten Luftkanal 1, vom Wertebereich des zweiten Luftmengensollwertes LS2 zwischen verschwindender Luftmenge, d.h. 0%, und maximaler Luftmenge, d.h. 100%, für den zweiten Luftkanal 2 sowie vom Wertebereich der Gebläseleistung GL zwischen abgeschaltetem Gebläse, d.h. 0%, und maximaler Gebläseleistung, d.h. 100%, gegeben ist. Vom gemeinsamen Koordinatenursprung mit dem Wert 0% für alle drei Größen LS1, LS2, GL nimmt die Gebläseleistung GL gemäß dem Kennfeld K_{G} mit wachsenden Werten für die beiden Luftmengensollwerte LS1, LS2 zunächst in etwa linear und dann in einem konkaven Verlauf mit schwächer werdender Steigung zu. Bei maximalem Wert, d.h. 100%, für den jeweils einen Luftmengensollwert liegt die Gebläseleistung GL des Kennfeldes K_{G} auf einer jeweiligen Endwertkurve E1, E2, die von einem minimalen Endwert A1, A2 bei minimalem Wert, d.h. 0%, des jeweils anderen Luftmengensollwertes mit Anwachsen des letzteren in einem entsprechend konkaven Verlauf bis zum Maximalwert, d.h. 100%, der Gebläseleistung GL anwächst.

Dies bedeutet, daß das den beiden Luftkanälen 1, 2 gemeinsame Luftzufuhrgebläse 4 seine maximale Förderleistung genau dann abgibt, wenn für beide Luftkanäle 1, 2 der maximale Luftmengensollwert von 100% eingestellt ist. Ist hingegen nur für einen Luftkanal der maximale Luftmengensollwert von 100% eingestellt, während für den anderen Luftkanal keine Luftzufuhr gewünscht wird, d.h. ein Luftmengensollwert von 0% vorgegeben wird, stellt die Anlagensteuereinheit mit ihrem Gebläsesteuerteil 7 den genannten minimalen Endwert A1, A2 der betreffenden Endwertkurve E1, E2 als Gebläseleistung GL ein. Dieser minimale Endwert A1, A2 beträgt z.B. etwa 75%, d.h. 3/4 der maximalen Gebläseleistung von 100%.

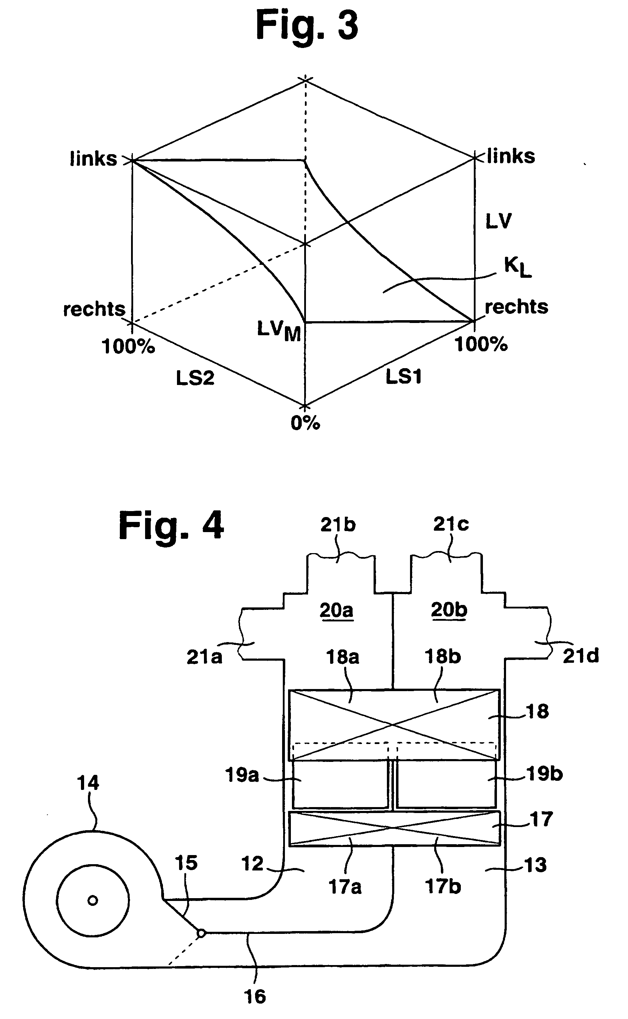

In Fig. 3 ist das im Luftverteilungs-Steuerteil 10 der Anlagensteuereinheit implementierte Kennfeld K_{L} dargestellt, mit dem der Luftverteilungs-Steuerteil 10 der Anlagensteuereinheit die Stellung LV der Luftverteileinheit 11, d.h. speziell die Stellung von deren Luftklappenanordnung 11b, bestimmt. Dabei sind die beiden Endpositionen der Luftverteileinheit 11, in denen jeweils einer der beiden Luftkanäle 1, 2 vollständig abgesperrt ist, ohne Beschränkung der Allgemeinheit mit "rechts" bzw. "links" bezeichnet, während auf den Achsen der horizontalen Koordinatenebenen des zugehörigen Koordinatenwürfels wiederum die beiden Luftmengensollwerte LS1, LS2 mit ihren möglichen Werten zwischen 0% und 100% abgetragen sind. Das Luftverteilungs-Kennfeld K_{L} bildet eine zweidimensionale Fläche im Koordinatenwürfel, die zum einen bei maximalem Wert von 100% für den einen Luftmengensollwert und gleichzeitig minimalem Wert von 0% für den anderen Luftmengensollwert in die betreffenden, sich diagonal gegenüberliegenden Würfeleckpunkte der Endstellungen "rechts" bzw. "links" mündet und des weiteren bei gleich groß gewählten Luftmengensollwerten eine Mittenstellung LV_{M} vorgibt, die mitten zwischen den beiden Endstellungen "rechts" und "links" liegt.

Mit den beiden Kennfeldern der Figuren 2 und 3 ist es der Anlagensteuereinheit mit ihrem Gebläsesteuerteil 7 und ihrem Luftverteilungs-Steuerteil 10 in Verbindung mit den vorgeschalteten Luftmengenstelleinheiten 8, 9 unter Zuhilfenahme des einzigen Luftzufuhrgebläses 4 und der Luftverteileinheit 11 möglich, die beiden getrennten Luftkanäle 1, 2 mit definierten, vorgebbaren Luftmengenanteilen zu speisen. Dadurch wird mit relativ geringem Aufwand ein erhöhter Klimatisierungskomfort erzielt.

Figur 4 zeigt ein erstes Beispiel einer insbesondere für ein Automobil einsetzbaren Klimaanlage der zu den Figuren 1 bis 3 beschriebenen Art in ihrem luftzufuhrseitigen Aufbau. Diese Klimaanlage ist als luftseitig geregelte Anlage realisiert und von einem asymmetrischen Aufbau, bei dem zwei getrennte Luftkanäle 12, 13 vorgesehen sind, die in ihrem vorderen Bereich rechtwinklig umgebogen verlaufen. Den beiden Luftkanälen 12, 13 ist ein gemeinsames Luftzufuhrgebläse 14 in Form eines Radialgebläses vorgeschaltet. Direkt an den Luftauslaß des Gebläses 4 schließt sich eine Luftverteileinheit 15 an, deren von einem nicht gezeigten Stellmotor betätigbare Luftklappenanordnung aus einer einzigen Luftklappe besteht, die an der Eintrittsseite der beiden Luftkanäle 12, 13 angeordnet ist. Dabei ist sie an der Vorderseite der die beiden Luftkanäle 12, 13 separierenden Trennwand 16 schwenkbeweglich zwischen der durchgezogenen und der gestrichelten Stellung verschwenkbar gelagert, wobei sie in diesen beiden Endstellungen je einen der beiden Luftkanäle 12, 13 verschließt. Das Luftzufuhrgebläse 14 und die Luftverteileinheit 15 werden in der zu den Figuren 1 bis 3 oben beschriebenen Weise von einer zugehörigen, in Fig. 4 der Übersichtlichkeit halber nicht explizit gezeigten Klimaanlagensteuereinheit entsprechend den vorgegebenen, abgespeicherten Kennfeldern in Abhängigkeit von den an den beiden zugehörigen Stelleinheiten eingestellten Luftmengensollwerten für die beiden Luftkanäle 12, 13 angesteuert.

Stromabwärts hinter dem Biegebereich der beiden Luftkanäle 12, 13 ist ein Verdampfer 17 der Klimaanlage so positioniert, daß er mit je einer Hälfte 17a, 17b im jeweiligen Luftkanal 12, 13 liegt. Analog schließt sich stromabwärts des Verdampfers 17 ein Heizkörper 18 an, der mit je einer Hälfte 18a, 18b im jeweiligen Luftkanal 12, 13 liegt. Vor dem Heizkörper 18 ist in jedem Luftkanal 12, 13 je eine temperatursteuernde Klappeneinheit 19a, 19b vorgesehen, die den Luftstrom im jeweiligen Luftkanal 12, 13 in zwei Anteile aufteilt, von denen der eine über den zugeordneten Heizkörperteil 18a, 18b geführt wird, während der andere Strömungsanteil den Heizkörper 18 umgeht. Damit wird die luftseitige Steuerbarkeit der Klimaanlage realisiert. Alternativ dazu kann eine wasserseitige Anlagensteuerung vorgesehen sein, indem der Heizkörper 18 mit einer für die Heizkörperteile 18a, 18b einzeln steuerbaren Heizwassermenge beaufschlagt wird. Die Luftströme der beiden Luftkanäle 12, 13 münden stromabwärts des Heizkörpers 18 in je einen zugehörigen Verteilerraum 20a, 20b, von dem die verschiedenen, zum jeweiigen Luftkanal 12, 13 gehörigen Luftauslässe 21a bis 21d abgehen.

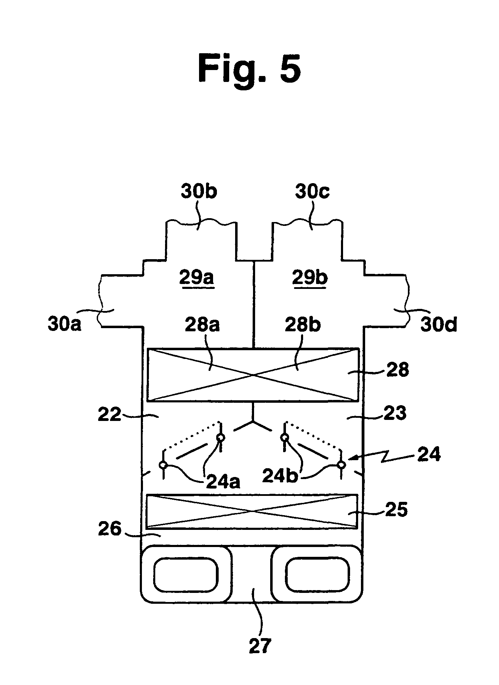

Fig. 5 zeigt ein weiteres Beispiel einer gemäß den Figuren 1 bis 3 aufgebauten und betriebenen, z.B. in Automobilen verwendbaren Klimaanlage, die in diesem Fall in symmetrischer und platzsparender Bauweise realisiert ist. Diese Klimaanlage beinhaltet zwei getrennte Luftkanäle 22, 23 mit eingangsseitig zugeordneter Luftverteileinheit 24, die hier zwei Paare von je zwei gemeinsam ansteuerbaren Luftklappen 24a, 24b samt nicht gezeigter, zugehöriger Stellmotorik beinhaltet. Mit dieser Luftverteileinheit 24 lassen sich die Eintrittsquerschnitte für die beiden Luftkanäle 22, 23 durch entsprechendes Einstellen des zugehörigen Luftklappenpaars 24a, 24b vollkommen unabhängig voneinander einstellen.

Bei der Klimaanlage von Fig. 5 ist der zugehörige Verdampfer 25 stromaufwärts der Luftverteileinheit 24 und damit in einem den beiden getrennten Luftkanälen 22, 23 vorgeordneten, gemeinsamen Luftzufuhrabschnitt 26 angeordnet, in welchem eingangsseitig stromaufwärts des Verdampfers 25 ein einziges Luftzufuhrgebläse 26 in Form eines Axialgebläses angeordnet ist. Durch diesen Aufbau wird der Verdampfer 25 unabhängig von der Aufteilung der Luftmenge auf die beiden getrennten Luftkanäle 22, 23 stets ganzflächig von dem vom Gebläse 26 zugeführten Luftstrom beaufschlagt, so daß immer die gesamte Verdampferfläche zur Luftkühlung ausgenutzt wird. Stromabwärts der Luftverteileinheit 24 ist ein Heizkörper 28 so positioniert, daß er sich mit je einer Hälfte 28a, 28b in den beiden getrennten Luftkanälen 22, 23 befindet. Dabei sind die beiden Heizkörperhälften 28a, 28b in nicht näher gezeigter, herkömmlicher Weise getrennt mit Heizwasser beaufschlagbar, wodurch eine wasserseitig geregelte Anlage realisiert wird. Stromabwärts des Heizkörpers 28 schließt sich für jeden Luftkanal 22, 23 ein eigener Verteilerraum 29a, 29b an, aus dem wiederum die zum betreffenden Luftkanal 22, 23 gehörigen Luftauslässe 30a bis 30d ausmünden.

Es versteht sich, daß neben den gezeigten Ausführungsformen weitere Realisierungen der Erfindung möglich sind, z.B. reine Heizanlagen ohne Verdampfer-Kühlwirkung und solche Heiz- oder Klimaanlagen, deren Luftverteileinheiten modifizierte Luftklappenanordnungen beinhalten, beispielsweise solche mit mehr als den gezeigten vier Luftklappen von Fig. 5. Charakteristisch für die erfindungsgemäßen Anlagen ist, daß ein gemeinsames Luftzufuhrgebläse für mehrere parallele Luftkanäle vorgesehen ist, das zusammen mit einer Luftverteileinheit in Abhängigkeit von für die Luftkanäle individuell vorgebbaren Luftmengensollwerten ansteuerbar ist. Es versteht sich, daß bei Bedarf auch mehr als zwei parallele Luftkanäle vorgesehen sein können, denen ein gemeinsames Luftzufuhrgebläse und eine geeignete Luftverteileinheit zugeordnet sind. Die zur Steuerung des Luftzufuhrgebläses und der Luftverteileinheit vorzugebenden Kennfelder können beispielsweise empirisch fahrzeugspezifisch ermittelt werden, z.B. aus Vorabmessungen der Luftmengen in den beteiligten Luftkanälen jeweils in Abhängigkeit vom Gebläseleistungssteuersignal und der Stellung der Luftverteileinheit.

## Patentansprüche

1. Heiz- oder Klimaanlage, insbesondere für ein Kraftfahrzeug, mit
- mehreren parallelen Luftkanälen (1, 2),
- einer Anlagensteuereinheit (7, 10),
- einem den parallelen Luftkanälen gemeinsam vorgeordneten, von der Anlagensteuereinheit steuerbaren Luftzufuhrgebläse (4),
- einer den parallelen Luftkanälen zugeordneten Heizkörpereinheit (18) und
- einer an der Eingangsseite der parallelen Luftkanäle angeordneten, von der Anlagensteuereinheit steuerbaren Luftverteileinheit 11 zur variablen Aufteilung der vom Luftzufuhrgebläse zugeführten Luft auf die einzelnen Luftkanäle,
**dadurch gekennzeichnet, daß**
- Mittel (8, 9) zur individuellen Vorgabe eines jeweiligen Luftmengensollwertes (LS1, LS2) für jeden der parallelen Luftkanäle (1, 2) vorgesehen sind und
- die Anlagensteuereinheit (7, 10) sowohl die Leistung des Luftzufuhrgebläses (4) als auch die Stellung der Luftverteileinheit (11) in Abhängigkeit von den für die Luftkanäle einzeln vorgegebenen Luftmengensollwerten steuert.

2. Heiz- oder Klimaanlage nach Anspruch 1, weiter **dadurch gekennzeichnet, daß** die Gebläseleistung von der Anlagensteuereinheit (7, 10) gemäß eines Kennfeldes (K_{G}) eingestellt wird, bei dem die Gebläseleistung (GL) in Abhängigkeit von je einem Luftmengensollwert mit konkavem Verlauf stetig bis zu einem Endwert (E1, E2) anwächst, der seinerseits mit steigenden Luftmengensollwerten der übrigen Luftkanäle von einem minimalen Endwert (A1, A2) bis zum Gebläseleistungs-Maximalwert (100%) ansteigt.

3. Klimaanlage nach Anspruch 1 oder 2, weiter **dadurch gekennzeichnet, daß** die Luftverteileinheit (24) zwischen einem Verdampfer (25) und der stromabwärts des Verdampfers positionierten Heizkörpereinheit (28) angeordnet ist, wobei jedem Luftkanal (22, 23) ein eigener Teil (28a, 28b) der Heizkörpereinheit zugeordnet ist.

4. Klimaanlage nach Anspruch 1 oder 2, weiter **dadurch gekennzeichnet, daß** die Luftverteileinheit (15) zwischen dem Luftzufuhrgebläse (14) und einem Verdampfer (17) angeordnet ist, wobei jedem Luftkanal (12, 13) ein eigener Teil (17a, 17b) des Verdampfers (17) und ein eigener Teil (18a, 18b) der stromabwärts des Verdampfers positionierten Heizkörpereinheit (18) zugeordnet ist.

5. Klimaanlage nach Anspruch 4, weiter **dadurch gekennzeichnet, daß** jedem Luftkanal (12, 13) eine stromabwärts des zugehörigen Verdampferteils (17a, 17b) und stromaufwärts des zugehörigen Teils (18a, 18b) der Heizkörpereinheit (18) positionierte, temperatursteuernde Luftklappeneinheit (19a, 19b) zugeordnet ist.

## Claims

1. Heating or air conditioning system, in particular for a motor vehicle, comprising
- a plurality of parallel air ducts (1, 2),
- a system control unit (7, 10),
- a common air supply fan (4) located upstream of the parallel air ducts and controllable by the system control unit,
- a heater unit (18) assigned to the parallel air ducts, and
- an air distributing unit (11) located on the input side of the parallel air ducts and controllable by the system control unit for the variable distribution of the air supplied by the air supply fan among the individual air ducts,
**characterised in that**
- means (8, 9) are provided for individually presetting an air volume set value (LS1, LS2) for each of the parallel air ducts (1, 2), and **in that**
- the system control unit (7, 10) controls both the power of the air supply fan (4) and the position of the air distributing unit (11) in dependence on the air volume set values individually preset for the air ducts.

2. Heating or air conditioning system according to claim 1, further **characterised in that** the fan power is set by the system control unit (7, 10) in accordance with a characteristic map (K_{G}), wherein the fan power (GL), in dependence on any single air volume set value, steadily increases along a concave path to an end value (E1, E2), which in turn increases from a minimum end value (A1, A2) to a maximum fan power value (100%) as the air volume set values of the remaining air ducts increase.

3. Air conditioning system according to claim 1 or 2, further **characterised in that** the air distributing unit (24) is located between an evaporator (25) and the heater unit (28) arranged downstream of the evaporator, with a separate part (28a, 28b) of the heater unit being assigned to each air duct (22, 23).

4. Air conditioning system according to claim 1 or 2, further **characterised in that** the air distributing unit (15) is located between an air supply fan (14) and an evaporator (17), with a separate part (17a, 17b) of the evaporator (17) and a separate part (18a, 18b) of the heater unit (18) arranged downstream of the evaporator being assigned to each air duct (12, 13).

5. Air conditioning system according to claim 4, further **characterised in that** a temperature-controlling air damper unit (19a, 19b) positioned downstream of the associated evaporator part (17a, 17b) and upstream of the associated part (18a, 18b) of the heater unit (18) is assigned to each air duct (12, 13).

## Revendications

1. Installation de chauffage ou de climatisation, en particulier pour un véhicule automobile, comprenant
- plusieurs canaux d'air (1, 2) parallèles,
- une unité de commande d'installation (7, 10),
- une soufflerie d'arrivée d'air (4) disposée en amont de l'ensemble des canaux d'air parallèles et pouvant être commandée par l'unité de commande d'installation,
- une unité de corps de chauffage (18) attribuée aux canaux d'air parallèles et
- une unité de répartition d'air 11 disposée sur le côté entrée des canaux d'air parallèles et pouvant être commandée par l'unité de commande d'installation pour la répartition variable de l'air amené par la soufflerie d'arrivée d'air entre les canaux d'air individuels,
**caractérisée en ce que**
- des moyens (8, 9) sont prévus pour la spécification individuelle d'une valeur de consigne de quantité d'air (LS1, LS2) respective pour chacun des canaux d'air (1, 2) parallèles et
- l'unité de commande d'installation (7, 10) commandant aussi bien la puissance de la soufflerie d'arrivée d'air (4) que la position de l'unité de répartition d'air (11) en fonction des valeurs de consigne de quantité d'air prédéfinies individuellement pour les canaux d'air.

2. Installation de chauffage ou de climatisation selon la revendication 1, **caractérisée** également en ce que la puissance de soufflerie est réglée par la commande d'installation (7, 10) selon un champ de caractéristiques (K_{G}), avec lequel la puissance de soufflerie (GL) croît en fonction d'une valeur de consigne de quantité d'air avec une courbe concave de façon constante jusqu'à une valeur finale (E1, E2), qui croît pour sa part avec des valeurs de consigne de quantités d'air croissantes des autres canaux d'air depuis une valeur finale (A1, A2) minimale jusqu'à une valeur maximale de puissance de soufflerie (100%).

3. Installation de climatisation selon la revendication 1 ou 2, **caractérisée** également en ce que l'unité de répartition d'air (24) est disposée entre un évaporateur (25) et l'unité de corps de chauffage (28) positionnée en aval de l'évaporateur, une partie (28a, 28b) propre de l'unité de corps de chauffage étant attribuée à chaque canal d'air (22, 23).

4. Installation de climatisation selon la revendication 1 ou 2, également **caractérisée en ce que** l'unité de répartition d'air (15) est disposée entre la soufflerie d'arrivée d'air (14) et un évaporateur (17), une partie propre (17a, 17b) de l'évaporateur (17) et une partie propre (18a, 18b) de l'unité de corps de chauffage (18) positionnée en aval de l'évaporateur étant attribuées à chaque canal d'air (12, 13).

5. Installation de climatisation selon la revendication 4, également **caractérisée en ce qu'**une unité de clapet d'air (19a, 19b) commandant la température et positionnée en aval de la partie d'évaporateur (17a, 17b) spécifique et en amont de la partie (18a, 18b) spécifique de l'unité de corps de chauffage (18) est attribuée à chaque canal d'air (12, 13).
